# EUROPÄISCHE PATENTSCHRIFT

(11) **EP 1 617 191 B1**
(45) Veröffentlichungstag und Bekanntmachung des Hinweises auf die Patenterteilung: **20.04.2011**
(21) Anmeldenummer: 04103407.5
(22) Anmeldetag: 16.07.2004
(51) Int. Cl.: G01G 21/28

(54) **Windschutzvorrichtung für eine Waage**
Wind guard device for a balance
Dispositif coupe-vent pour une balance

(43) Veröffentlichungstag der Anmeldung: 18.01.2006
(73) Patentinhaber: Mettler-Toledo AG, 8606 Greifensee (CH)
(72) Erfinder: Lüchinger, Paul, 8610, Uster (CH); Rotach, Hansjoerg, 8307, Effretikon (CH); Leisinger, Roger, 8044, Zürich (CH); Fringeli, Eduard, 8606, Bubikon (CH)

(56) Entgegenhaltungen:
- US-A- 4 798 250
- US-A- 5 058 692
- US-A- 5 298 688

## Beschreibung

Die Erfindung bezieht sich auf eine Windschutzvorrichtung für eine Waage, die einen eine Waagschale umgebenden Wägeraum umschliesst und wenigstens eine durch ein Fenster verschliessbare Öffnung aufweist. Eine derartige Waage findet vorwiegend in Labors Anwendung.

Die EP 1 367 372 A1 offenbart eine Windschutzvorrichtung, die einen den Wägeraum einer Waage, in welchem die Waagschale angeordnet ist, teilweise umfassenden, aus mindestens zwei flächigen Elementen bestehenden, windabweisenden Körper aufweist. Der Körper ist lose handhabbar in wenigstens zwei verschiedenen Stellungen positionierbar, in denen je wenigstens eine Öffnung für den Zugriff in den Wägeraum geschaffen wird. Der Körper lässt sich durch den Anwender dabei derart positionieren, dass die realisierbaren Öffnungen einen Zugriff in den Wägeraum aus unterschiedlichen Richtungen erlauben. Dabei kann der Körper entweder direkt auf einem die Wägezelle und die Wägeelektronik enthaltenden Waagengehäuse angeordnet werden oder auf einem Sockel, der auf das Waagengehäuse aufsetzbar ist. Im letzteren Fall bildet der Sockel den Boden des Wägeraums und kann als weiteres Element des Windschutzes mit mindestens einer feststehenden, beispielsweise einer die Rückwand des Wägeraums bildenden Wand versehen sein.

In der EP 1 351 041 A2 wird eine Waage mit einem Windschutz, welcher mindestens zwei zum Öffnen und Schliessen des Wägeraums verschiebbare Wände aufweist, beschrieben, wobei ein verschiebbarer Verbindungskörper, der einer Verbindung nicht aneinander angrenzender verschiebbarer Wände dient, vorhanden ist. Es sind ausserdem Verschiebegriffe vorgesehen, die für ein miteinander Koppeln und voneinander Lösen der verschiebbaren Wände untereinander, beziehungsweise einer verschiebbaren Wand mit dem Verbindungskörper ausgestaltet sind. Ein solcher Verschiebegriff ist aus einander paarweise ergänzenden Griffelementen gebildet, die an jeweils zueinander benachbarten verschiebbaren Wänden, beziehungsweise an dem Verbindungskörper und einer dazu benachbarten verschiebbaren Wand befestigt sind, und die jedes einzeln für sich als Griff zum Verschieben der entsprechenden Wand beziehungsweise des Verbindungskörpers ausgestaltet sind. Von den Griffelementen weist ein erstes Griffelement eine Aussparung auf, in welche das jeweils zweite Griffelement durch eine Schwenkbewegung des ersten und/oder des zweiten Griffelements für eine Kopplung des Griffelementenpaares eingreifbar ausgestaltet ist, wobei ein zu einem Verschiebegriff gekoppeltes Griffelementenpaar in seiner äusseren Form und Grösse im Wesentlichen derjenigen des ersten Griffelements mit der Aussparung entspricht.

Die US 4 798 250 A offenbart einen zylindrischen Windschutz für eine Waage, welcher aus mindestens zwei Wandsegmenten besteht, wobei sämtliche Wandsegmente mit Hilfe eines Motors gegeneinander verschoben werden können. Es ist möglich, die Wandsegmente individuell oder miteinander gekoppelt synchron zu bewegen.

In der US 5 058 692 A ist ein Windschutz mit beweglichen Wandelementen, die durch einen Motor bewegt werden können, beschrieben. Der Motor kann mit mindestens zwei verschiedenen Geschwindigkeiten betrieben werden, so dass ein einzelnes Wandelement des Windschutzes zunächst rasch und vor dem Erreichen einer programmierbaren Endposition langsamer geöffnet beziehungsweise geschlossen werden kann.

Eine andere Waage mit einer Windschutzvorrichtung wird in der EP 0 556 473 A1 beschrieben. In dieser Waage ist mindestens eine der Öffnungen des Windschutzes durch ein Fenster verschliessbar, welches in mindestens zwei Fensterabschnitte aufgeteilt ist, die in parallel nebeneinander liegenden Führungsnuten längs ihres Verschiebeweges geführt sind. An den Kanten der Fensterabschnitte sind Mitnehmer befestigt, die beim Verschieben eines ersten Fensterabschnitts, den mit diesem das Fenster bildenden zweiten Fensterabschnitt mitziehen. Auf diese Weise wird vermieden, dass beim vollständigen Freilegen der Öffnungen des Windschutzes ein Fenster in nennenswerter Weise über das Gehäuse der Waage hinausragt oder sich gar verkanten kann. Im geöffneten Zustand des Wägeraums liegen die Fensterabschnitte stapelartig aufeinander, beziehungsweise sind nebeneinander angeordnet.

Problematisch für die Ausgestaltung eines Fensters in einer Waage gemäss der EP 0 556 473 A1, bei dem ein Fensterabschnitt einen weiteren Fensterabschnitt durch Mitnehmer selbsttätig mitzieht ist das ruckartige Anfahren und Abbremsen dieses weiteren Fensterabschnitts, wenn die Mitnehmer der jeweiligen Fensterabschnitte in Anlage zueinander gelangen.

Aufgabe der vorliegenden Erfindung ist es daher, für den Windschutz einer Waage mit mindestens einem Fenster, welches wenigstens zwei relativ zueinander verschiebbare Fensterabschnitte aufweist, ein ruckfreies sowie ein leichtgängiges Öffnen und Schliessen zu gewährleisten.

Gelöst wird diese Aufgabe mit einer Windschutzvorrichtung für eine Waage, die einen eine Waagschale umgebenden Wägeraum umschliesst und wenigstens eine durch ein Fenster verschliessbare Öffnung aufweist. Das mindestens eine verschliessbare Fenster besitzt wenigstens zwei verschiebbare Fensterabschnitte, welche sich in jeder Stellung teilweise überlappen. Erfindungsgemäss ist ein Antrieb zum Öffnen und Schliessen des mindestens einen Fensters vorgesehen, der die Fensterabschnitte derart miteinander koppelt, dass sich sämtliche Fensterabschnitte beim Öffnen und Schliessen gleichzeitig, mit jeweils verschiedenen Geschwindigkeiten und in einem fest vorgebbaren Verhältnis ihrer jeweiligen Geschwindigkeiten bewegen.

Eine mit einem solchen Antrieb versehene Windschutzvorrichtung erlaubt ein sanftes und ruckfreies Öffnen und Schliessen der Fenster. Mitnehmer, wie sie aus dem Stand der Technik bekannt sind, insbesondere solche die an den sich überlappenden Kanten der Fensterabschnitte angeordnet sind, sind nicht mehr notwendig. Auf diese Weise besitzt ein solches Fenster keine eine Sicht in den Wägeraum beeinträchtigenden Stege.

Die Geschwindigkeit der jeweiligen Fensterabschnitte beim Öffnen und Schliessen ist in Bezug auf die Position des jeweiligen Fensterabschnitts in der Geschlossenstellung des Fensters derart abgestimmt, dass sie ausgehend von der im normalen Gebrauch der Waage dem Benutzer zugewandten Seite, das heisst der Frontseite, mit der Position des betreffenden Fensterabschnitts in Bewegungsrichtung beim Öffnen abnimmt.

Dabei stehen insbesondere die jeweiligen Geschwindigkeiten der Fensterabschnitte beim Öffnen und Schliessen in einem Verhältnis zueinander, welches dem Verhältnis der von den Fensterabschnitten von der vollständigen Geschlossenstellung zur vollständigen Offenstellung des Fensters, beziehungsweise umgekehrt, zurückzulegenden Strecken entspricht.

In besonders vorteilhafter Weise verfügt die Windschutzvorrichtung über eine Abdeckwand mit einer durch ein oberes Fenster verschliessbaren oberen Öffnung und über mindestens eine durch ein seitliches Fenster verschliessbare seitliche Öffnung, wobei die Fensterabschnitte mindestens eines seitlichen Fensters in einer Führungsvorrichtung hängend gelagert sind. Die Führungsvorrichtung ist nahe der Abdeckwand der Windschutzvorrichtung angeordnet und befindet sich bevorzugt in einem geschlossenen Käfig. Dieser Käfig, der auch den Antrieb für das mindestens eine seitliche Fenster enthalten kann, dient in besonders vorteilhafter Weiterbildung gleichzeitig der Führung des oberen Fensters.

Dadurch, dass die jeweilige Führungsvorrichtung für die seitlichen Fensterabschnitte an der Oberseite der Waage und in einem weitgehend geschlossenen Käfig angeordnet ist, wird die Gefahr einer Verschmutzung der Führungsvorrichtung und des Antriebs weitest gehend vermieden.

In einer bevorzugten Ausführungsform weist der Antrieb ein Zahnrad, eine gehäusefeste Zahnstange und eine mit einem Fensterabschnitt verbundene Zahnstange auf, wobei das Zahnrad mit beiden Zahnstangen im Eingriff ist. Alternativ kann der Antrieb auch einen Riemen, einen Zahnriemen oder einen Seilzug aufweisen.

Für die Führung und Abstützung der Fensterabschnitte in der Führungsvorrichtung sind Räder, die mit den Fensterabschnitten verbunden sind, vorhanden. Diese rollen in einer vorteilhaften Ausgestaltung auf einem Absatz im Inneren des Käfigs. Durch eine nahezu spielfreie Führung wird einer möglichen Verkantungsgefahr der relativ schmalen Fensterabschnitte vorgebeugt.

Durch die hängende Lagerung der Fensterabschnitte ist an der Unterseite keine besondere Führung notwendig: Es hat sich als zweckmässig erwiesen, der Leitung dienende Elemente an der Oberseite eines Sockels, oder am Waagengehäuse selbst anzubringen, um ein seitliches Verschwenken in der Fensterebene zu vermeiden.

In einer anderen Ausführungsform einer Waage mit einer erfindungsgemässen Windschutzvorrichtung weisen die Fensterabschnitte eine weitere Führungsvorrichtung im unteren Bereich der Waage auf. Diese weitere Führungsvorrichtung ist für eine Bedienung eines Fensters von der gegenüberliegenden Seite aus ausgebildet und/oder für ein gleichzeitiges Öffnen und Schliessen beider seitlicher Fenster von einer Seite aus. Aufgrund der hängenden Lagerung der Fensterabschnitte kann diese weitere Führungsvorrichtung derart ausgestaltet werden, dass sie im vollständig geöffneten Zustand der seitlichen Fenster keine über das Waagengehäuse vorstehenden Teile besitzt. Dadurch wird einer Verschmutzung entgegen gewirkt. Auf den Boden des Wägeraums fallendes Wägegut kann problemlos beispielsweise mittels eines Tuchs aus diesem gewischt werden, ohne in die untere Führungsvorrichtung der Fensterabschnitte zu gelangen.

Ein besonderer Vorteil der Tatsache, dass die Fensterabschnitte der seitlichen Fenster an deren Oberseite geführt sind, nämlich im Käfig, besteht darin, dass die Fensterabschnitte auf die untere Führung keinen Druck ausüben. Dies kommt dem ruckfreien und leichtgängigen Öffnen und Schliessen der seitlichen Fenster zugute.

Ein Fenster der Windschutzvorrichtung kann zwei, drei oder mehr Fensterabschnitte aufweisen. Insbesondere sind die Fensterabschnitte zum Zwecke der Reinigung aus der Führungsvorrichtung herausnehmbar. Alternativ kann auch die gesamte Führungsvorrichtung mitsamt den jeweiligen seitlichen Fenstern von der Windschutzvorrichtung gelöst werden, in ähnlicher Weise, wie es in der EP 1 195 585 beschrieben wurde.

Der Antrieb der Windschutzvorrichtung weist ein Getriebe beziehungsweise eine Übersetzungsvorrichtung auf und kann sowohl für ein manuelles als auch für ein motorisches Öffnen und Schliessen eines jeweiligen Fensters ausgebildet sein.

Die Erfindung wird anhand von Beispielen, wie sie stark schematisiert in den Zeichnungen dargestellt sind, im Folgenden beschrieben. Es zeigen:
- Figur 1: eine Windschutzvorrichtung für eine Waage mit geschlossenem Wägeraum in perspektivischer Darstellung,
- Figur 2: die Windschutzvorrichtung aus Figur 1 mit auf einer Seite geöffnetem Wägeraum in perspektivischer Darstellung,
- Figur 3: die Windschutzvorrichtung aus Figur 1 in der Seitenansicht mit dem seitlichen Fenster in der Geschlossenstellung,
- Figur 4: die Windschutzvorrichtung aus Figur 2 in der Seitenansicht mit einem seitlichen Fenster in der vollständigen Offenstellung,
- Figur 5: eine Ausschnittvergrösserung der Figur 3, welche den Käfig, in welchem die Fensterabschnitte geführt sind in der Seitenansicht zeigt,
- Figur 6: eine Ausschnittvergrösserung der Figur 4, welche den Käfig, in welchem die Fensterabschnitte geführt sind in der Seitenansicht zeigt,
- Figur 7: die Windschutzvorrichtung aus Figur 1 in der Ansicht von hinten,
- Figur 7a: eine vergrösserte Ansicht des Ausschnitts A aus Figur 7,
- Figur 7b: eine vergrösserte Ansicht des Ausschnitts B aus Figur 7,
- Figur 8: den Antrieb sowie Teile der Führungsvorrichtung aus Figur 7a in einer ersten Ausführungsform im Schnitt,
- Figur 9: den Antrieb aus Figur 7a in einer zweiten Ausführungsform im Schnitt,
- Figur 10: eine weitere Ausführungsform einer Waage mit erfindungsgemässer Windschutzvorrichtung mit auf einer Seite geöffnetem Wägeraum in perspektivischer Darstellung,
- Figur 11: die Waage aus Figur 10 mit auf einer Seite geöffnetem Wägeraum in perspektivischer Darstellung aus einer anderen Sicht;
- Figur 12: einen Ausschnitt des unteren Teils der Waage aus Figur 10 oder Figur 11 im Schnitt.

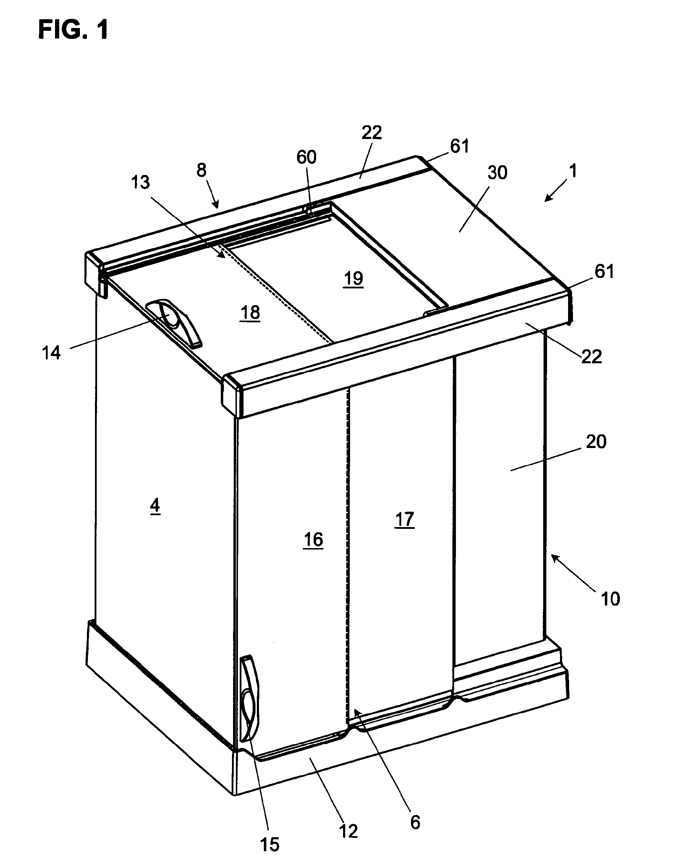

Die Figur 1 zeigt in dreidimensionaler Darstellung aus der Sicht von schräg vorne eine Windschufzvorrichtung 1 für eine Waage, die einen Wägeraum umschliesst. Die Windschutzvorrichtung 1 wird gebildet von einer Frontwand 4, zwei seitliche Öffnungen verschliessenden Fenstern 6, von denen in der Figur 1 nur das dem Betrachter zugewandte zu sehen ist, einer Abdeckwand 8 sowie einem die Rückwand des Wägeraums bildenden Rückraum 10. Ferner weist die Windschutzvorrichtung 1 einen Sockel 12 auf, der auf ein die Wägemechanik enthaltendes Waagengehäuse (hier nicht sichtbar) aufgesetzt werden kann. Der Sockel 12 kann mit dem Waagengehäuse mittels Halterungen verbunden sein oder auch in das Waagengehäuse integriert sein. Eine mit einem Sockel versehene Windschutzvorrichtung, die auf ein Waagengehäuse aufsetzbar ist, ist in der eingangs zitierten EP 1 367 372 A1 offenbart. Die Fenster 6, sowie die Frontwand 4 sind bevorzugt aus Glas gefertigt. Alternativ können die Fenster 6 oder die Frontwand 4 aus durchsichtigem Kunststoff, der mit einer elektrisch leitfähigen Beschichtung versehenen ist, gebildet sein, wobei Massnahmen zur Verbindung der leitfähigen Beschichtung mit den elektrisch leitenden Teilen der Waage getroffen sind.

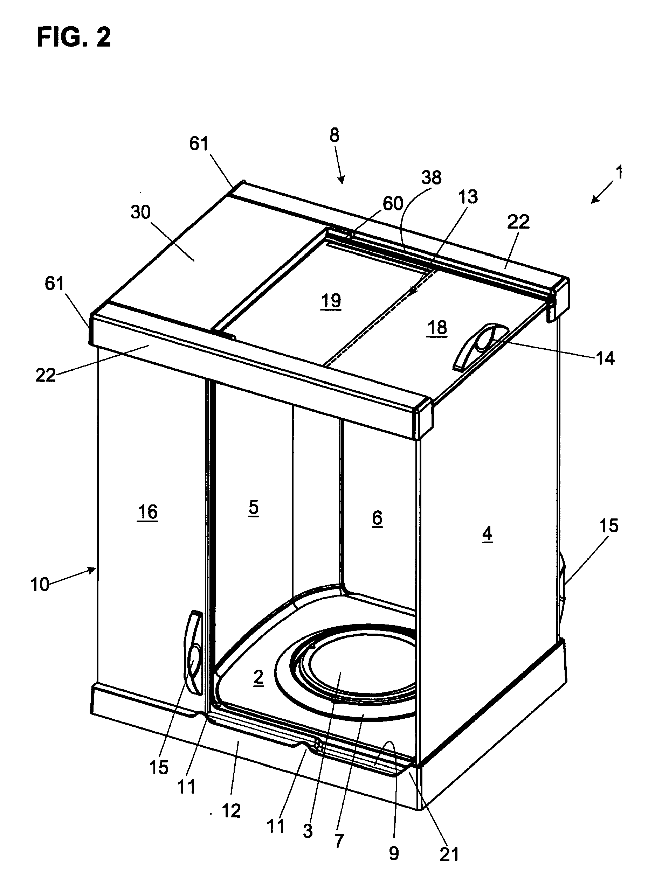

In die Abdeckwand 8 ist ein ebenfalls bevorzugt aus Glas oder einem durchsichtigen, mit einer leitfähigen Beschichtung versehenem Kunststoff bestehendes oberes Fenster 13 integriert, welches sich durch Verschieben in Richtung Rückraum 10 öffnen lässt. Hierzu kann ein Benutzer am Griff 14 angreifen. Die Abdeckwand 8 weist einen den Rückraum 10 von oben verschliessenden, um ein Lager 60 klappbaren Deckel 30 auf. Das Öffnen und Schliessen der seitlichen Fenster 6 kann in zum Öffnen und Schliessen des Fensters 13 analoger Weise mittels des Griffs 15 erfolgen. Sowohl die seitlichen Fenster 6 als auch das obere Fenster 13 weisen jeweils zwei Fensterabschnitte 16, 17, 18, 19 auf. Dabei bewegen sich beim Öffnen und Schliessen der Fenster 6, 13, insbesondere aber im Fall der seitlichen Fenster 6, die beiden Fensterabschnitte 16, 17 gleichzeitig und gemeinsam, wobei sie sich in jeder Position überlappen (angedeutet durch die gestrichelten Linien in der Figur). In der vollständig geöffneten Position, wie sie die Figur 2 für eines der beiden seitlichen Fenster 6 zeigt, bilden die beiden Fensterabschnitte 16, 17 einen Stapel und überdecken die seitliche Wand 20 (siehe Figur 1) des Rückraums 10.

Die Darstellung der Windschutzvorrichtung 1 in Figur 2 ermöglicht einen Blick in den Wägeraum auf die Rückwand 5 und auf den vom Sockel 12 gebildeten Wägeraumboden 2. Ebenfalls in der Figur 2 ist die Anordnung einer von einem Windschutzring 7 umgebenen Waagschale 3 zu sehen. Der Sockel 12 besitzt eine Durchführung für den Durchtritt des die Waagschale 3 mit der hier nicht sichtbaren Wägezelle verbindenden Lastübertragungsglieds, welches hier ebenfalls nicht zu sehen ist.

Ferner zeigt Figur 2, dass der Sockel 12 einen seitlichen Absatz 9 bildet. Dieser wird an seiner Aussenkante begrenzt durch zwei der Lenkung der Fensterabschnitte 16, 17 dienenden Rippen 11, welche aus dem Sockel 12 nach oben überstehen. An der Frontseite, d.h. an der im Betrieb in der Regel einem Benutzer zugewandten Seite, ist die Sockelwandung gegenüber dem Wägreaumboden 2 für eine Fassung der Frontwand 4 einerseits und andererseits als vorderer Anschlag für den Fensterabschnitt 16 dienend hochgezogenen. Dadurch wird eine seitliche Abschrägung 21 zum seitlichen Absatz 9 gebildet, welche ebenfalls der Lenkung des Fensterabschnitts 16 dient.

An ihrem oberen Ende sind die Fensterabschnitte 16, 17 in einem der beidseits an der Windschutzvorrichtung 1 angebrachten Käfige 22 (siehe Figuren 1 und 2) hängend geführt. In diesen Käfigen 22 ist eine Führungsvorrichtung sowie der Antrieb der Fensterabschnitte 16, 17 untergebracht. Zusätzlich sind an der Aussenseite der Käfige 22 Führungsnuten 38 angeordnet, die der Führung der Fensterabschnitte 18, 19 des oberen Fensters 13 der Abdeckwand 8 dienen.

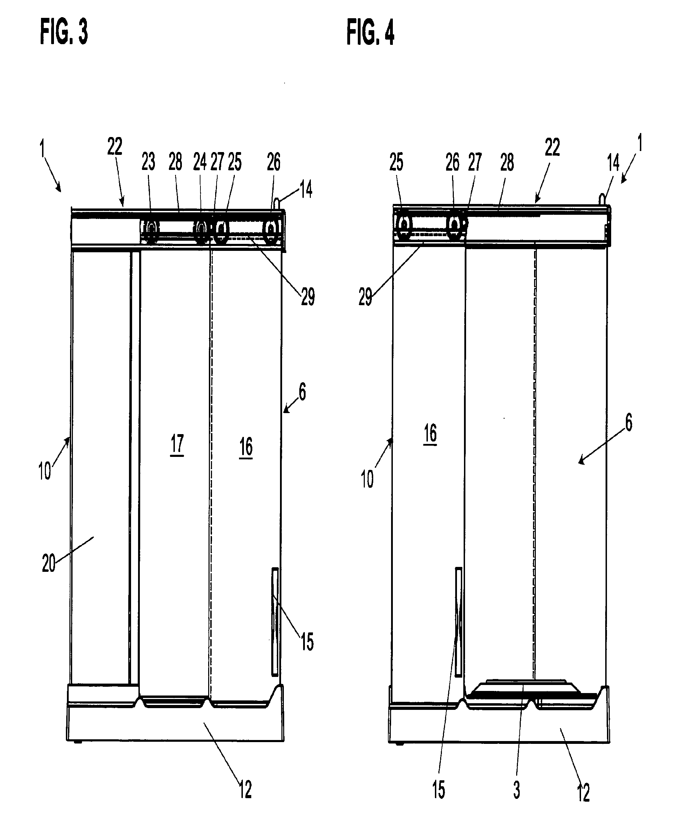

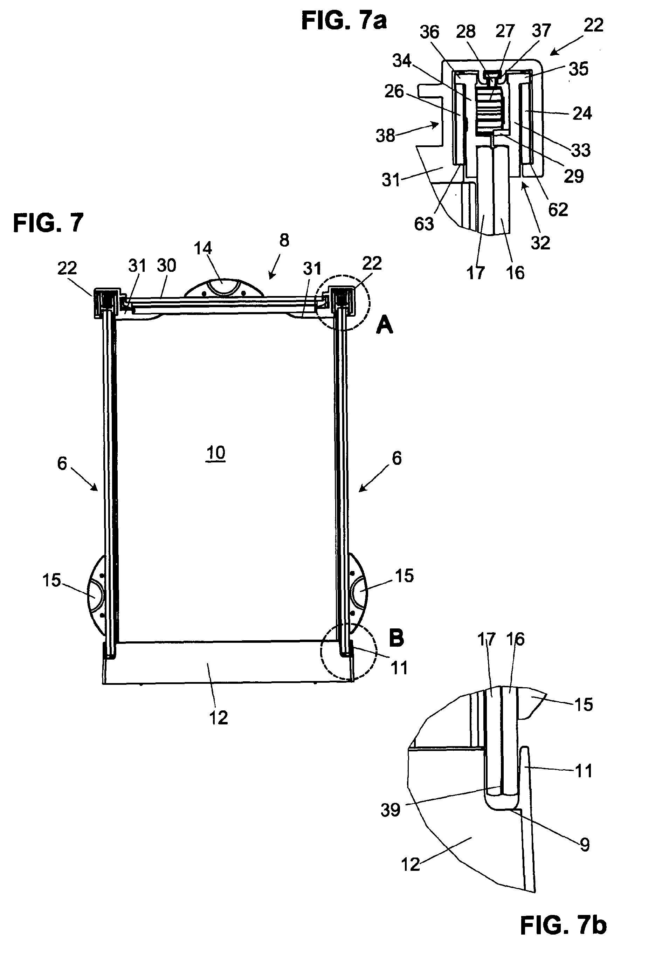

Die Figur 3 zeigt die Windschutzvorrichtung 1 bei geschlossenem seitlichem Fenster 6 in der Seitenansicht, wobei der Käfig 22 seitlich offen gezeichnet wurde, so dass ein Blick auf die Führungsvorrichtung und den Antrieb ermöglicht wird. Jeder der Fensterabschnitte 16, 17 weist an seiner Oberseite, nahe seiner jeweiligen Ecken je ein Rad 23, 24, 25, 26 auf. Diese Räder 23, 24, 25, 26 sind jeweils auf einem Absatz im Inneren des Käfigs 22 geführt und bewirken somit eine stabile Aufhängung der Fensterabschnitte 16, 17 im Käfig 22, wie weiter unten anhand der Figuren 7 und 7a näher erläutert wird. Mit dem Fensterabschnitt 17 ist ein Zahnrad 27 verbunden, welches für das Verschieben der Fensterabschnitte 16, 17 mit einer oberen und einer unteren Zahnstange 28, 29 in Eingriff ist.

Die Figur 4 zeigt in derselben Ansicht, wie Figur 3 die Windschutzvorrichtung 1 bei geöffnetem seitlichem Fenster 6. In der Figur ist ferner die Waagschale 3 und das gegenüber liegende geschlossene Fenster 6 sichtbar. Die beiden Fensterabschnitte 16, 17 sind, einen Stapel bildend, hintereinander angeordnet und bedecken die seitliche Wand 20 des Rückraums 10. Zu sehen ist nunmehr lediglich der Fensterabschnitt 16. Das Zahnrad 27 hat sich beim Verschieben der beiden Fensterabschnitte 16, 17 in die gezeigte Stellung entlang der Zahnstange 28 bewegt und befindet sich nun an deren hinterem Ende.

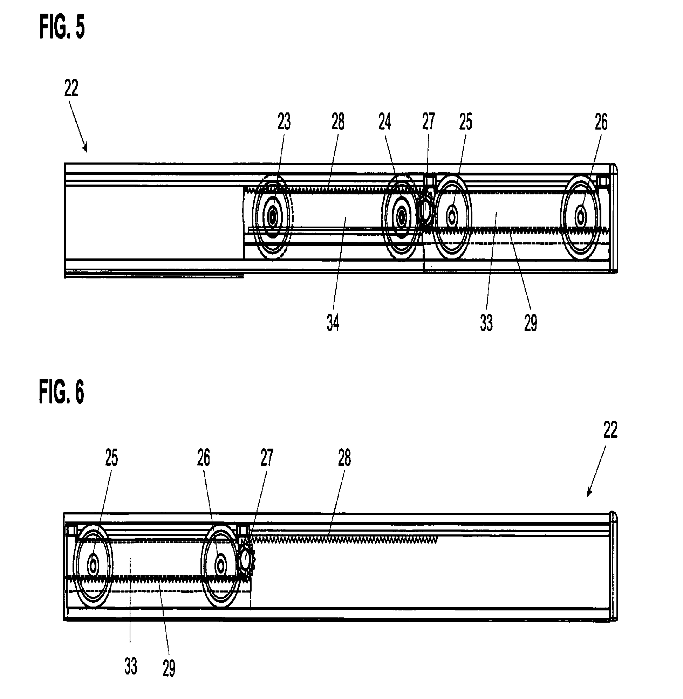

Die Funktion des Antriebs der beiden Fensterabschnitte 16, 17 wird anhand der Figuren 5 und 6, welche eine vergrösserte Darstellung der jeweiligen Sicht in den Käfig 22 aus den Figuren 3 und 4 sind, erläutert. Die Figur 5 zeigt die Anordnung des Zahnrads 27 in Bezug auf die Zahnstangen 28, 29 bei geschlossenem und die Figur 6 bei vollständig geöffnetem Fenster 6. In der Geschlossenstellung (Figur 5) ist das Zahnrad 27 am vorderen Ende der Zahnstange 28 und am hinteren Ende der Zahnstange 29 angeordnet, hingegen in der Offenstellung (Figur 6) am hinteren Ende der Zahnstange 28 und am vorderen Ende der Zahnstange 29. Die Begriffe "vorne" beziehungsweise "hinten" bezeichnen hier der "Frontwand 4 zugewandt" beziehungsweise "dem Rückraum 10 zugewandt". Die Zahnstange 28 ist fest mit dem Käfig 22 verbunden und mittig in diesem angeordnet, die Zahnstange 29 ist mit dem Fensterabschnitt 16 verbunden und das Zahnrad 27 ist am vorderen Ende des Fensterabschnitts 17 angeordnet. Beide Zahnstangen 28, 29 weisen hier dieselbe Länge auf. Wird zum Öffnen eines Fensters 6 am Griff 15 (siehe Figuren 3 und 4) der Fensterabschnitt 16 nach hinten verschoben, so bewirkt der Eingriff der Zahnstange 29 mit dem Zahnrad 27 eine Drehbewegung des Zahnrads 27. Da das Zahnrad 27 gleichzeitig mit der Zahnstange 28 im Eingriff ist, rollt es entlang der Zahnstange 28 ab, wodurch es sich und der damit verbundene Fensterabschnitt 17 mit einer Geschwindigkeit bewegt, die der Hälfte der Geschwindigkeit, mit der sich die Zahnstange 29 und der damit verbundene Fensterabschnitt 16 relativ zur Zahnstange 28 bewegt, entspricht. Das heisst das Verhältnis der Geschwindigkeit des Fensterabschnitts 16 zu der des Fensterabschnitts 17 beim Öffnen und Schliessen des Fensters 6 entspricht dem Verhältnis des Durchmessers zum Radius des Zahnrads 27, also 2:1.

In der Figur 7, welche eine Sicht auf die Windschutzvorrichtung 1 von hinten darstellt, wird gezeigt, wie die Fensterabschnitte 16, 17 der beiden seitlichen Fenster 6 im Käfig 22 geführt sind und ihre Anordnung an der Unterseite der Windschutzvorrichtung 1, wo sie ledigüch durch die Rippen 11 eine Lenkung erfahren. Für eine klarere Darstellung sind die beiden Käfige 22 offen gezeichnet. Eine solche Situation tritt ein, wenn der Deckel 30 nach vorne geklappt wird, wobei die Fensterabschnitte 16, 17, 18, 19 zum Reinigen aus der Windschutzvorrichtung 1 entnommen werden können. Ansonsten bildet der Deckel 30 vermittels einer Blende 61 (siehe Figuren 1 und 2) einen Abschluss der Käfige und damit einen hinteren Anschlag für die Fensterabschnitte 16, 17, 18, 19.

Die Figur 7a, welche eine Ausschnittvergrösserung der rechten oberen Ecke der Windschutzvorrichtung 1 aus Figur 7 darstellt, namentlich des umrahmten Bereichs A, erlaubt einen Blick in den Käfig 22. Der Käfig 22 ist bevorzugt einstückig hergestellt; als Material kommen Metalle, insbesondere Aluminium, oder Kunststoff in Betracht. Der Käfig 22 ist über einen Ausleger 31 an der Oberseite des Rückraums 10 befestigt. Er weist an seiner Unterseite einen Spalt 32 auf, der sich über seine gesamte Länge erstreckt. In den Spalt 32 ragen, seitlich gegeneinander versetzt die beiden seitlichen Fensterabschnitte 16, 17 hinein, welche jeweils an ihrem oberen Ende in einem oberen Führungselement 33, 34 (siehe auch Figuren 5 und 6) aus Kunststoff gefasst sind. Jedes obere Führungselement weist an seinem bezüglich der Arbeitsposition der Waage vorderen und hinteren Ende jeweils einen Abstandshalter 35, 36 auf, welche mit geringem Spiel in den Raum zwischen der jeweiligen seitlichen Wand des Käfigs 22 und einer mittig an der Oberseite des Käfigs 22 in dessen Innerem angeordneten Führungsschiene 37 eingepasst und geführt sind. In der Führungsschiene 37 selbst ist die in den Figuren 3 bis 6 gezeigte, bevorzugt aus einem Kunststoffmaterial bestehende Zahnstange 28 angeordnet. Diese ist im Eingriff mit dem Zahnrad 27, welches an der ins Innere des Käfigs 22 weisenden Seite des mit dem Fensterabschnitt 17 verbundenen Führungselements 34 angeordnet und am Führungselement 34 gelagert ist. Das Zahnrad 27 ist ausserdem mit der Zahnstange 29 in Eingriff, wobei letztere am Führungselement 33 des Fensterabschnitts 16 gelagert ist. Zwischen den Fensterabschnitten 16, 17 und den Führungselementen 33, 34 besteht in bevorzugter Weise jeweils eine Klebeverbindung.

An den Aussenseiten der oberen Führungselemente 33, 34 sind die Räder 23, 24, 25, 26 angeordnet und an deren jeweils nach vorne und nach hinten weisenden Enden derselben gelagert. In der Figur 7a sind nur zwei Räder 24, 26 zu sehen. Die Räder rollen jeweils auf einem Absatz 62, 63 des Käfigs 22.

Am linken Rand der Figur 7a ist die Führungsnut 38 für die beiden Fensterabschnitte 18, 19 des oberen Fensters 13 zu sehen.

Figur 7b zeigt in der Vergrösserung des Ausschnitts B aus Figur 7, wie die beiden Fensterabschnitte 16, 17 am Sockel 12 angeordnet sind. Es ist klar zu erkennen, dass die beiden Fensterabschnitte 16, 17, welche im Käfig 22 hängend gelagert sind, nicht mit dem Auflagebereich 9 des Sockels 12 in Kontakt sind und lediglich durch die Rippen 11 eine Lenkung erfahren. Im Käfig 22 sind die Fensterabschnitte 16, 17 nahezu spielfrei geführt, wodurch sowohl ein Verkippen um eine Achse senkrecht zur Fensterebene vermieden wird, als auch die Bewegungsfreiheit in vertikaler Richtung beschränkt wird. Ein Verschwenken um eine Achse entlang der Längsausdehnung der Käfige 22 wird durch die Rippen 11 begrenzt. Allerdings gewähren diese Rippen 11 durch ihre Anordnung am Sockel den Fensterabschnitten 16, 17 genügend Spiel, um ein Verkanten beim Wiedereinsetzen nach ihrer Entnahme zu vermeiden.

Damit zwischen den Scheiben der Fensterabschnitte 16, 17 über deren gesamte Höhe ein definierter Abstand aufrechterhalten wird, ist eine davon mit einem dünnen, etwa 5 mm breiten Gleitband 39, vorzugsweise aus einem Polymer, an ihrer Unterseite versehen. Dieses hält die Fensterabschnitte 16, 17 in einem geringen Abstand voneinander, welcher jedoch möglichst klein sein sollte, um in geschlossenem Zustand den Zugang von Luftströmungen in den Wägeraum zu vermeiden.

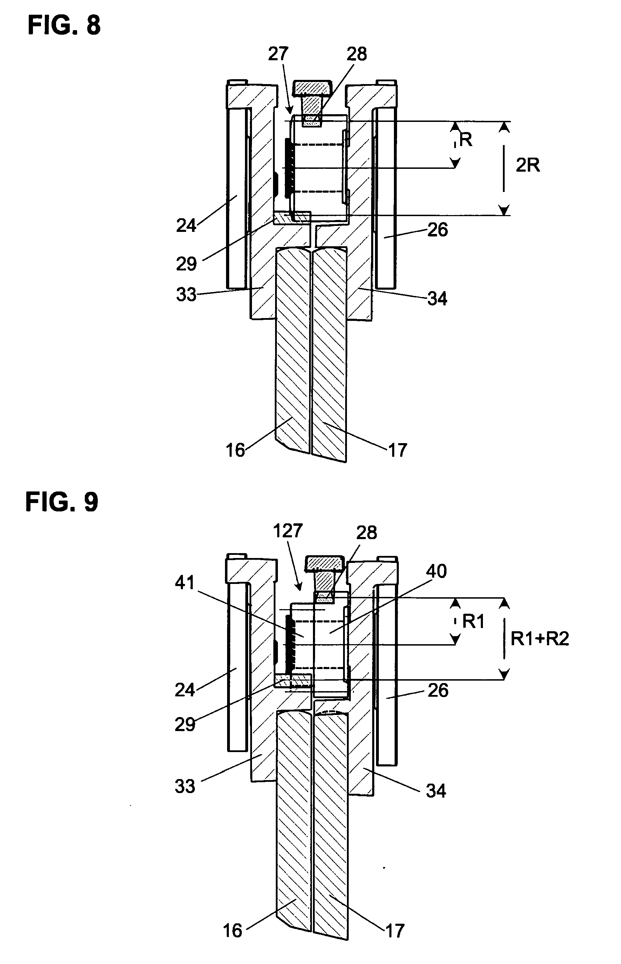

In Figur 8 sind in einer Schnitt-Darstellung der Antrieb und Teile der Führungsvorrichtung bei weg gelassenem Käfig 22 zu sehen. Dargestellt ist der Antrieb, welcher die Fensterabschnitte 16, 17 des in Figur 7 auf der linken Seite gezeigten Fensters 6 antreibt. Das Zahnrad 27, welches einerseits in die Zahnstange 28 und andererseits in die Zahnstange 29 eingreift ist am Führungselement 34 des Fensterabschnitts 17 drehbar befestigt. In der gezeigten Darstellung bewegt sich der Fensterabschnitt 16 mit der doppelten Geschwindigkeit des Fensterabschnitt 17 beim Öffnen und Schliessen des Fensters 6, was dem Verhältnis des Durchmessers D = 2R zum Radius R des Zahnrads 27 entspricht, also 2:1.

Die Figur 9 zeigt in zu Figur 8 analoger Darstellung eine andere Ausführungsform des Antriebs, wobei das Verhältnis der Geschwindigkeiten der beiden Fensterabschnitte 16, 17 nicht 2:1 ergibt. Das Zahnrad 127 ist gestuft und in zwei Abschnitte unterteilt, wobei ein erster Zahnradabschnitt 40 mit einem Radius R1 mit der Zahnstange 28 in Eingriff ist und ein zweiter Zahnradabschnitt 41 mit einem Radius R2 mit der Zahnstange 29. Wenn beim Öffnen und Schliessen des Fensters 6 die Zahnstange 29 zusammen mit dem Fensterabschnitt 16 entlang dem Zahnrad 127 bewegt wird, so rollt dieses sich entlang der Zahnstange 28 ab und wird in die selbe Richtung, wie die Zahnstange 29 bewegt. Dabei ist die Geschwindigkeit der Zahnstange 29 und damit die des Fensterabschnitts 16 proportional zur Summe der Radien der beiden Zahnradabschnitte 40, 41: R1 + R2 und die Geschwindigkeit des Zahnrads 127 und damit des Fensterabschnitts 17 proportional zum Radius R1. Auf diese Weise können beliebige Geschwindigkeitsverhältnisse zwischen den beiden sich zusammen bewegenden Fensterabschnitten 16, 17 realisiert werden, wobei den geometrischen Erfordernissen, der Grösse eines Fensterabschnitts und/oder eines gewünschten Verschiebewegs Rechnung getragen werden kann. Mit zwei oder mehreren gestuften Zahnrädern 127 können auch mehr als zwei Fensterabschnitte in einem gewünschten Geschwindigkeitsverhältnis zum Öffnen und Schliessen des Fensters der Windschutzvorrichtung einer Waage realisiert werden.

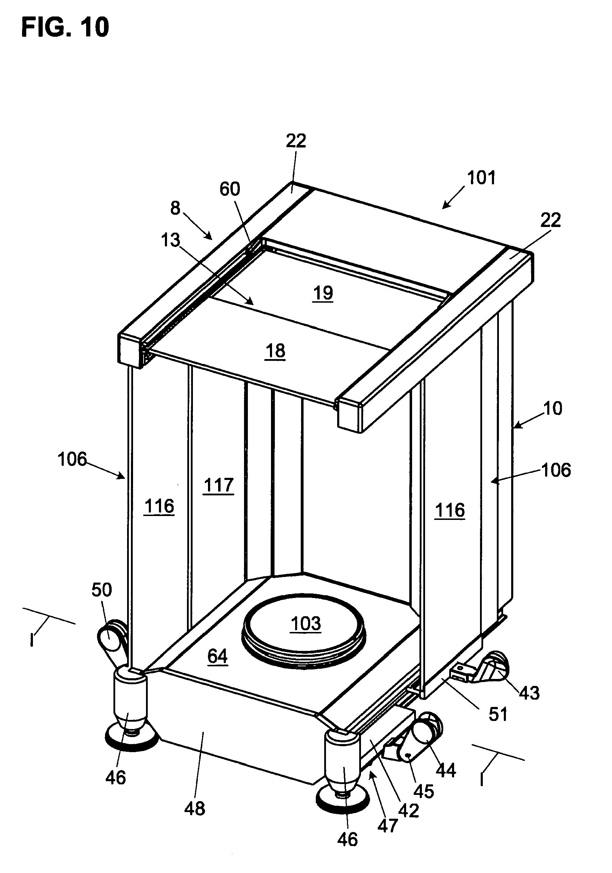

In der Figur 10 ist eine weitere mit einer erfindungsgemässen Windschutzvorrichtung 101 ausgestattete Waage in perspektivischer Darstellung aus der Sicht von schräg vorne zu sehen. Dabei wurde aus Gründen der Anschaulichkeit die Frontwand weggelassen, so dass ein Blick in den Wägeraum in welchem die Waagschale 103 angeordnet ist, möglich wird. Teile der Waage, die sich von jenen in den Figuren 1 bis 9 nicht unterscheiden, sind mit demselben Bezugszeichen versehen und an dieser Stelle nicht noch einmal beschrieben. Das rechts in der Figur angeordnete Fenster 106 ist teilweise geöffnet, das linke vollständig geschlossen. Im Bereich der Abdeckwand 8 und der Käfige 22 gleicht die Windschutzvorrichtung derjenigen aus den Figuren 1 und 2. Auch der Antrieb und die Führungsvorrichtung dieser Fensterabschrtitte 116, 117 entspricht jenen wie sie in Zusammenschau mit den vorangehenden Figuren beschrieben wurden.

Die Windschutzvorrichtung 101 der gezeigten Waage ist nicht über einen Sockel mit dem Waagengehäuse verbindbar, sondern direkt am Waagengehäuse 48 angebracht. Letzteres steht auf 3 Füssen, von denen in der Figur die beiden vorderen, zur Nivellierung der Waage höhenverstellbaren Füsse 46 zu sehen sind.

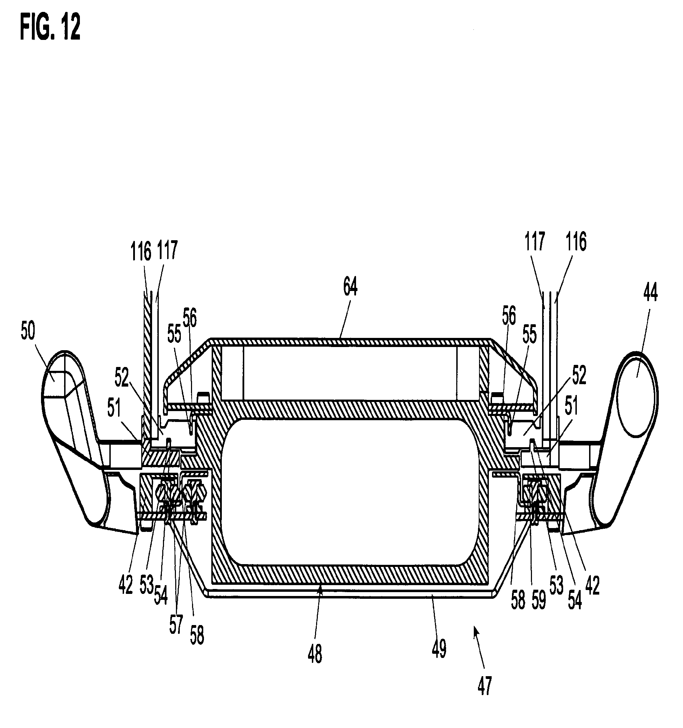

Der Fensterabschnitt 116 einer für den Betrieb aufgestellten Waage ist an seiner Unterseite mit einer Halterung 51 versehen, an welchem ein erstes Griffelement 43 angebracht ist. Ein zweites Griffelement 44, welches um eine a-zentrisch angeordnete, das zweite Griffelement 44 durchstossende Achse 45 schwenkbar ist, ist an einem Mitnehmer 42 befestigt. Die beiden Griffelemente 43, 44 können, einen Verschiebegriff 50 bildend, miteinander gekoppelt werden, wodurch der Fensterabschnitt 116 an den Mitnehmer 42 gekoppelt wird. Letzterer ist Teil eines Wagens 47, der sich unterhalb des Waagengehäuses 48 bis auf die andere Seite erstreckt und dort ebenfalls mit einem Mitnehmer und einem zweiten Griffelement 44 versehen ist (siehe weiter unten in Zusammenschau mit der Figur 12). In der Figur 10 sind auf der linken Seite der Waage beide Griffelemente 43, 44 miteinander gekoppelt und bilden einen Verschiebegriff 50. Auf diese Weise ist es möglich, die beiden seitlichen Fenster 106 bedarfsweise miteinander zu koppeln oder voneinander zu lösen. Mit Hilfe des Wagens 47, beziehungsweise der an jedem Fenster 106 befestigten Verschiebegriffe 50 oder der Griffelemente 44 können je nach Kopplung beide seitlichen Fenster 106 gleichzeitig oder auch je eines davon, jedoch von der gegenüberliegenden Seite, betätigt werden. Eine mit einem solchen Verschiebegriff 50 versehenen Windschutzvorrichtung ist in der US2003/0188898 A1 im Detail beschrieben.

Wie der Figur 10 zu entnehmen ist, ist das Waagengehäuse 48 so gestaltet, dass, sollte sich Schmutz im Wägeraum auf der Abdeckung 64 des Bodenraums ansammeln, dieser nicht den unteren Führungsbereich der Fenster 106 beeinträchtigen kann, da jener unter der Abdeckung 64 des Bodenraums angeordnet ist. Die Halterungen 51, 52 der Fensterabschnitte 116, 117 greifen unterhalb dieser in entsprechende Führungsnuten ein. Somit kann von der Waagschale 103 herab gefallenes Wägegut problemlos aus dem Wägeraum, das heisst von der Abdeckung des Bodenraums 64 weggewischt werden. Im geöffneten Zustand der Windschutzvorrichtung 101, wenn die Fensterabschnitte 116, 117 die seitliche Wand 20 des Rückraums 10 bedecken, stehen keine der Führung dienenden Teile über die Abdeckung 64 des Bodenraums vor.

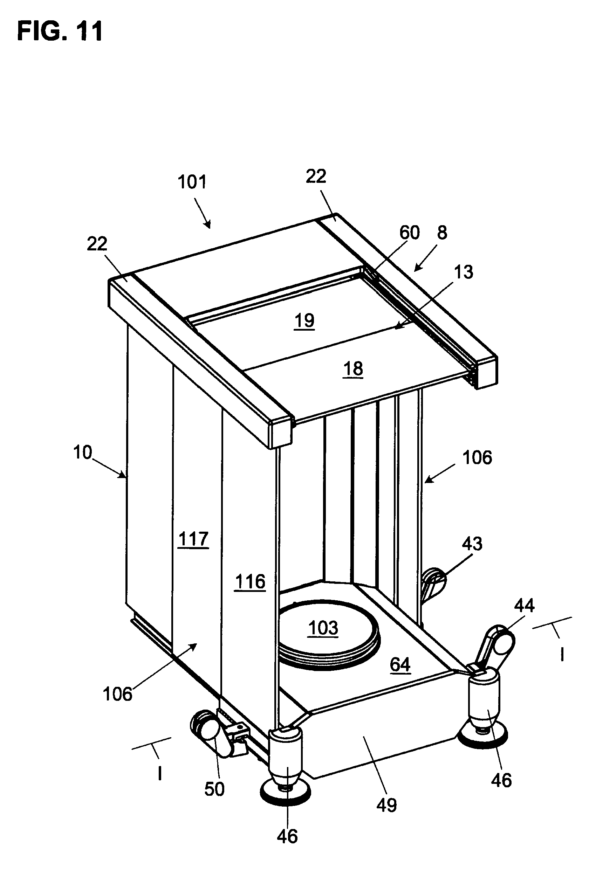

Die Figur 11, zeigt die Waage aus Figur 10 in perspektivischer Sicht auf das geschlossene Fenster 106. Hier ist die Kopplung der beiden Griffelemente 43, 44 zum Verschiebegriff 50 deutlich zu sehen. In dieser Konfiguration kann entweder mit dem Verschiebegriff 50 auf der linken Seite oder mit dem Griffelement 44 auf der rechten Seite das linke Fenster 106 geöffnet und geschlossen werden.

In der Figur 12, welche als Ausschnitt einen Schnitt entlang der Linie I-I in Figur 10 oder Figur 11 zeigt, ist zu sehen, wie die Fensterabschnitte 116, 117 an der Unterseite der Waage gehaltert und geführt sind. Jeder Fensterabschnitt 116, 117 ist mit einer Halterung 51, 52 an der jeweiligen Unterkante versehen. Dabei greift die Halterung 51 des Fensterabschnitts 116 mit einem Vorsprung 53 in eine erste Nut 54 der Halterung 52 des Fensterabschnitts 117 ein. In eine zweite Nut 55 der Halterung 52 greift eine am Gehäuse 48 befestigte Schiene 56 ein. Beim Verschieben des Fensterabschnitts 116 gleitet die Halterung 51 entlang der Halterung 52 und diese wiederum entlang der Schiene 56.

Der Wagen 47 weist ein die beiden Mitnehmer 42 verbindendes Verbindungselement 49 auf, welches mit der Unterseite der Mitnehmer 42 jeweils verschraubt ist. Der Wagen 47 wird auf einer Seite mittels zweier innerhalb einer Aussparung des einen Mitnehmers angeordneten Rollenpaare 57 (nur eines ist auf der linken Seite in der Figur zu sehen) an einem gehäusefesten s-förmig gebogenen Leitblech 58 geführt. Auf der gegenüber liegenden Seite ist eine Stützung des Wagens 47 mittels zweier ebenfalls entlang einem Leitblech 58 beweglicher Rollen 59 (in der Figur ist auf der rechten Seite nur eine davon zu sehen), welche ebenfalls innerhalb des entsprechenden Mitnehmers 42 angeordnet sind, gegeben. Die Rollen 59 beziehungsweise die Rollenpaare 57 sind bevorzugt nahe dem vorderen und dem hinteren Ende der jeweiligen Mitnehmer 42 angeordnet.

Durch die hängende Führung der Fensterabschnitte 116, 117 ist die Führung an der Unterseite entlastet.

Es versteht sich von selbst, dass anstelle der Rollenpaare 57 und der Rollen 59 jede andere den Wagen 47 stabilisierende und eine Verkantung desselben verhindernde Führung für den Wagen 47 verwendet werden kann.

Die erfindungsgemässe Windschutzvorrichtung 1, 101 kann, wie gezeigt werden konnte, in Waagen verschiedenster Ausführungsform eingesetzt werden. Insbesondere ist auch der Antrieb nicht nur auf einen solchen, bei dem Zahnstangen und Zahnräder zusammenwirken, beschränkt. Denkbar ist auch ein Seilzug-Antrieb, sowie ein Riemen- oder Zahnriemen-Antrieb. Der Antrieb kann sowohl motorisch als auch von Hand betätigt werden.

Führungsvorrichtung und Antrieb sind auch für Fensterabschnitte 18, 19 des oberen Fensters anwendbar, bevorzugt ist hier jedoch eine Führung gemäss dem Stand der Technik. Im Rahmen der vorliegenden Erfindung sind auch Führungsvorrichtungen in gekrümmter Ausgestaltung denkbar, die Fensterabschnitte mit gekrümmten Scheiben führen. Als besondere Ausführungsform sei hier auf eine zylindrische Windschutzvorrichtung verwiesen.

Ferner ist die Anzahl der Fensterabschnitte zum Öffnen und Schliessen der Windschutzvorrichtung nicht auf derer zwei beschränkt, es können auch drei, in besonderen Fällen sogar mehr solcher Fensterabschnitte, eine seitliche Öffnung oder eine obere Öffnung einer Windschutzvorrichtung für eine Waage verschliessend, angeordnet sein.

### Bezugszeichenliste

- 1, 101: Windschutzvorrichtung
- 2: Wägeraumboden
- 3, 103: Waagschale
- 4: Frontwand
- 5: Rückwand
- 6, 106: seitliches Fenster
- 7: Windschutzring
- 8: Abdeckwand
- 9: Auflagebereich
- 10: Rückraum
- 11: Führungsrippen
- 12: Sockel
- 13: oberes Fenster
- 14: Griff
- 15: Griff
- 16, 116: Fensterabschnitt
- 17, 117: Fensterabschnitt
- 18: Fensterabschnitt
- 19: Fensterabschnitt
- 20: Seitliche Wand des Rückraums
- 21: Abschrägung
- 22: Käfig
- 23: Rad
- 24: Rad
- 25: Rad
- 26: Rad
- 27, 127: Zahnrad
- 28: Obere Zahnstange
- 29: Untere Zahnstange
- 30: Deckel
- 31: Ausleger
- 32: Spalt
- 33: Führungselement
- 34: Führungselement
- 35: Abstandshalter
- 36: Abstandshalter
- 37: Führungsschiene
- 38: Führungsnut
- 39: Gleitband
- 40: Zahnradabschnitt
- 41: Zahnradabschnitt
- 42: Mitnehmer
- 43: erstes Griffelement
- 44: zweites Griffelement
- 45: Achse
- 46: Füsse
- 47: Wagen
- 48: Waagengehäuse
- 49: Verbindungselement
- 50: Verschiebegriff
- 51: Halterung des Fensterabschnitts 116
- 52: Halterung des Fensterabschnitts 117
- 53: Vorsprung
- 54: Erste Nut
- 55: Zweite Nut
- 56: Schiene
- 57: Rollenpaar
- 58: Leitblech
- 59: Rolle
- 60: Lager
- 61: Blende
- 62: Absatz
- 63: Absatz
- 64: Abdeckung des Bodenraums

## Patentansprüche

1. Windschutzvorrichtung (1, 101) für eine Waage, die einen eine Waagschale (3, 103) umgebenden Wägeraum umschliesst, mit wenigstens einer durch ein Fenster (6, 13, 106) verschliessbaren Öffnung, wobei das Fenster (6, 13, 106) wenigstens zwei verschiebbare Fensterabschnitte (16, 17, 18, 19, 116, 117) aufweist, welche sich in jeder Stellung teilweise überlappen, **dadurch gekennzeichnet, dass** ein Antrieb zum Öffnen und Schliessen des Fensters (6, 13, 106) vorhanden ist, der die Fensterabschnitte (16, 17, 18, 19, 116, 117) derart miteinander koppelt, dass sich sämtliche Fensterabschnitte (16, 17, 18, 19, 116, 117) beim Öffnen und Schliessen gleichzeitig, mit jeweils verschiedenen Geschwindigkeiten und in einem fest vorgebbaren Verhältnis ihrer jeweiligen Geschwindigkeiten bewegen.

2. Windschutzvorrichtung nach Anspruch 1, **dadurch gekennzeichnet, dass** die Geschwindigkeit der jeweiligen Fensterabschnitte (16, 17, 18, 19, 116, 117) beim Öffnen und Schliessen in Bezug auf deren Position in der Geschlossenstellung mit deren Position in Bewegungsrichtung beim Öffnen abnimmt.

3. Windschutzvorrichtung nach Anspruch 1 oder 2, **dadurch gekennzeichnet, dass** die jeweiligen Geschwindigkeiten der Fensterabschnitte (16, 17, 18, 19, 116, 117) beim Öffnen und Schliessen in einem Verhältnis zueinander stehen, welches dem Verhältnis der von den Fensterabschnitten (16, 17, 18, 19, 116, 117) von der vollständigen Offenstellung zur vollständigen Geschlossenstellung des Fensters (6, 13, 106) zurückzulegenden Strecken entspricht.

4. Windschutzvorrichtung nach Anspruch 1, 2 oder 3, **dadurch gekennzeichnet, dass** diese eine Abdeckwand (8) mit einer durch ein oberes Fenster (13) verschliessbaren oberen Öffnung aufweist und mindestens eine durch ein seitliches Fenster (6, 106) verschliessbare seitliche Öffnung aufweist.

5. Windschutzvorrichtung nach Anspruch 4, **dadurch gekennzeichnet, dass** die Fensterabschnitte (16, 17, 116, 117) des mindestens einen seitlichen Fensters (6, 106) in einer Führungsvorrichtung nahe der Abdeckwand (8) der Windschutzvorrichtung (1, 101) hängend gelagert sind.

6. Windschutzvorrichtung nach Anspruch 4 oder 5, **dadurch gekennzeichnet, dass** die Führungsvorrichtung und/oder der Antrieb für das mindestens eine seitliche Fenster (6, 106) in einem Käfig (22) angeordnet ist, der gleichzeitig der Führung des oberen Fensters (13) dient.

7. Windschutzvorrichtung nach einem der Ansprüche 1 bis 6, **dadurch gekennzeichnet, dass** der Antrieb ein Zahnrad (27, 127), eine gehäusefeste Zahnstange (28) und eine mit einem Fensterabschnitt (16, 116) verbundene Zahnstange (29) aufweist, wobei das Zahnrad (27, 127) mit beiden Zahnstangen (28, 29) im Eingriff ist.

8. Windschutzvorrichtung nach einem der Ansprüche 1 bis 6, **dadurch gekennzeichnet, dass** der Antrieb einen Riemen, einen Zahnriemen oder einen Seilzug aufweist.

9. Windschutzvorrichtung nach einem der Ansprüche 5 bis 8, **dadurch gekennzeichnet, dass** die Führung und Abstützung der Fensterabschnitte (16, 17, 116, 117) in der Führungsvorrichtung durch Räder (23, 24, 25, 26), die mit den Fensterabschnitten (16, 17, 116, 117) verbunden sind, erfolgt.

10. Windschutzvorrichtung nach einem der Ansprüche 1 bis 9, **dadurch gekennzeichnet, dass** ein Fenster (6, 13, 106) zwei oder drei Fensterabschnitte (16, 17, 18, 19, 116, 117) aufweist.

11. Windschutzvorrichtung nach einem der Ansprüche 1 bis 10, **dadurch gekennzeichnet, dass** die Fensterabschnitte (16, 17, 18, 19, 116, 117) aus ihren jeweiligen Führungsvorrichtungen herausnehmbar sind.

12. Windschutzvorrichtung nach einem der Ansprüche 1 bis 10, **dadurch gekennzeichnet, dass** die Fenster (6, 106) mitsamt ihrer Führungsvorrichtung von der Windschutzvorrichtung (1, 101) lösbar sind.

13. Windschutzvorrichtung nach einem der Ansprüche 1 bis 12, **dadurch gekennzeichnet, dass** die Fensterabschnitte (16, 17, 18, 19, 116, 117) aus Glas oder aus durchsichtigem Kunststoff, der eine leitfähige Beschichtung aufweist, gefertigt sind.

14. Waage mit einer Windschutzvorrichtung nach einem der Ansprüche 1 bis 13, **dadurch gekennzeichnet, dass** die Waage ein Waagengehäuse aufweist, und dass die Windschutzvorrichtung (1) einen Sockel (12) aufweist, welcher auf dem Waagengehäuse positionierbar ist.

15. Waage mit einer Windschutzvorrichtung nach einem der Ansprüche 1 bis 13, **dadurch gekennzeichnet, dass** die Waage ein Waagengehäuse (48) aufweist, und dass die Windschutzvorrichtung (101) direkt am Waagengehäuse (48) angeordnet ist.

16. Waage nach Anspruch 14 oder 15, **dadurch gekennzeichnet, dass** diese eine weitere Führungsvorrichtung für das mindestens eine seitliche Fenster (106) in ihrem unteren Bereich aufweist, die derart ausgestaltet ist, dass sie bei geöffnetem seitlichem Fenster (106) keine über die Windschutzvorrichtung (101) und/oder das Waagengehäuse (48) vorstehenden Teile besitzt.

17. Waage nach Anspruch 16, **dadurch gekennzeichnet, dass** die weitere Führungsvorrichtung für eine Bedienung eines seitlichen Fensters (106) von der gegenüberliegenden Seite und/oder für ein gleichzeitiges Öffnen und Schliessen beider seitlicher Fenster (106) ausgebildet ist.

## Claims

1. Draft protection device (1, 101) for a balance, wherein said draft protection device encloses a weighing compartment surrounding a weighing pan (103), with at least one opening that can be closed by a window (6, 13, 106), said window (6, 13, 106) comprising at least two slidable window sections (16, 17, 18, 19, 116, 117) which partially overlap each other in any of their positions, **characterized in that** a drive mechanism is provided for the opening and closing of the window (6, 13, 106), which drive mechanism couples the window sections (16, 17, 18, 19, 116, 117) to each other in such a way that all of the window sections (16, 17, 18, 19, 116, 117) move simultaneously, each at a different speed during the opening and closing, wherein a fixed ratio between the respective speeds can be predetermined by design.

2. Draft protection device according to claim 1, **characterized in that** the respective opening and closing speed of each window section (16, 17, 18, 19, 116, 117) depends on the position that said window section takes in the closed condition of the window, so that the respective speeds of the window sections decrease in the order of the closed positions of the window sections in the direction of the movement for opening the window.

3. Draft protection device according to claim 1 or 2, **characterized in that** the respective opening and closing speeds of the window sections (16, 17, 18, 19, 116, 117) are in the same ratio to each other as the respective distances that the window sections (16, 17, 18, 19, 116, 117) have to travel from the completely closed position to the completely open position of the window (6, 13, 106).

4. Draft protection device according to claim 1, 2 or 3, **characterized in that** the draft protection device includes a roof portion (8) with a top opening that can be closed by a top window (13), and at least one lateral opening that can be closed by a side window (6, 106).

5. Draft protection device according to claim 4, **characterized in that** the window sections (16, 17, 116, 117) of the at least one side window (6, 106) are suspended in a guiding device close to the roof portion (8) of the draft protection device (1, 101).

6. Draft protection device according to claim 4 or 5, **characterized in that** the guiding device and/or the drive mechanism for the at least one side window (6, 106) is arranged in a cage (22) which at the same time serves as a guide for the top window (13).

7. Draft protection device according to one of the claims 1 to 6, **characterized in that** the drive mechanism includes a pinion gear (27, 127), a housing-mounted fixed rack (28), and a rack (29) that is connected to a window section (16, 116), with the pinion gear (27, 127) being in meshing engagement with both racks (28, 29).

8. Draft protection device according to one of the claims 1 to 6, **characterized in that** the drive mechanism includes a drive belt, a spur belt, or a rope and pulley arrangement.

9. Draft protection device according to one of the claims 5 to 8, **characterized in that** the window sections (16, 17, 116, 117) are guided and supported in the guiding device by wheels (23, 24, 25, 26) that are connected to the window sections (16, 17, 116, 117).

10. Draft protection device according to one of the claims 1 to 9, **characterized in that** a window (6, 13, 106) has two or three window sections (16, 17, 18, 19, 116, 117).

11. Draft protection device according to one of the claims 1 to 10, **characterized in that** the window sections (16, 17, 18, 19, 116, 117) can be taken out of their respective guiding devices.

12. Draft protection device according to one of the claims 1 to 10, **characterized in that** each window (6, 106) can be released together with its guiding device from the draft protection device (1, 101).

13. Draft protection device according to one of the claims 1 to 12, **characterized in that** the window sections (16, 17, 18, 19, 116, 117) are made of glass or of a transparent polymer material with a conductive coating.

14. Balance with a draft protection device according to one of the claims 1 to 13, **characterized in that** the balance has a balance housing and that the draft protection device (1) has a base (12) which can be set into position on the balance housing.

15. Balance with a draft protection device according to one of the claims 1 to 13, **characterized in that** the balance has a balance housing (48) and that the draft protection device (101) is arranged directly on the balance housing (48).

16. Balance according to claim 14 or 15, **characterized in that** the balance has at least one further guiding device for the at least one side window (106), which further guiding device is arranged in a lower portion of the balance and configured so that none of its parts protrude beyond the draft protection device (101) and/or the balance housing (48) when the side window (106) is in the open position.

17. Balance according to claim 16, **characterized in that** the further guiding device is configured so that a side window (106) can be operated from the opposite side and/or that both side windows (106) can be opened or closed together.

## Revendications

1. Dispositif de protection contre le vent (1, 101) pour une balance, qui définit un espace de pesage entourant un plateau de balance (3, 103), comprenant au moins une ouverture pouvant être fermée par une fenêtre (6, 13, 106), la fenêtre (6, 13, 106) présentant au moins deux parties de fenêtre (16, 17, 18, 19, 116, 117) coulissantes, qui se chevauchent partiellement dans toute position,
**caractérisé en ce qu'**un entraînement pour l'ouverture et la fermeture de la fenêtre (6, 13, 106) est présent, lequel couple les parties de fenêtre (16, 17, 18, 19, 116, 117) les unes avec les autres de telle sorte que toutes les parties de fenêtre (16, 17, 18, 19, 116, 117) se déplacent lors de l'ouverture et de la fermeture en même temps, avec des vitesses respectivement différentes et avec un rapport de leurs vitesses respectives qui peut être prédéfini de façon fixe.

2. Dispositif de protection contre le vent selon la revendication 1, **caractérisé en ce que** la vitesse des parties de fenêtre respectives (16, 17, 18, 19, 116, 117) diminue lors de l'ouverture et de la fermeture par rapport à leur position dans la position fermée avec leur position dans le sens de déplacement lors de l'ouverture.

3. Dispositif de protection contre le vent selon la revendication 1 ou 2, **caractérisé en ce que** les vitesses respectives des parties de fenêtre (16, 17, 18, 19, 116, 117) lors de l'ouverture et de la fermeture se situent entre elles dans un rapport qui correspond au rapport des tronçons qui doivent être parcourus par les parties de fenêtre (16, 17, 18, 19, 116, 117) depuis la position complètement ouverte jusqu'à la position complètement fermée de la fenêtre (6, 13, 106).

4. Dispositif de protection contre le vent selon la revendication 1, 2 ou 3, **caractérisé en ce que** celui-ci présente une paroi de recouvrement (8) avec une ouverture supérieure pouvant être fermée par une fenêtre (13) supérieure et présente au moins une ouverture latérale pouvant être fermée par une fenêtre (6, 106) latérale.

5. Dispositif de protection contre le vent selon la revendication 4, **caractérisé en ce que** les parties de fenêtre (16, 17, 116, 117) de la au moins une fenêtre latérale (6, 106) sont montées suspendues dans un dispositif de guidage à proximité de la paroi de recouvrement (8) du dispositif de protection contre le vent (1, 101).

6. Dispositif de protection contre le vent selon la revendication 4 ou 5, **caractérisé en ce que** le dispositif de guidage et/ou l'entraînement pour la au moins une fenêtre latérale (6, 106) est disposé dans une cage (22) qui sert en même temps au guidage de la fenêtre (13) supérieure.

7. Dispositif de protection contre le vent selon l'une quelconque des revendications 1 à 6, **caractérisé en ce que** l'entraînement présente une roue dentée (27, 127), une crémaillère (28) solidaire du boîtier et une crémaillère (29) reliée à une partie de fenêtre (16, 116), la roue dentée (27, 127) étant engrenée avec les deux crémaillères (28, 29).

8. Dispositif de protection contre le vent selon l'une quelconque des revendications 1 à 6, **caractérisé en ce que** l'entraînement présente une courroie, une courroie crantée ou un entraînement par câble.

9. Dispositif de protection contre le vent selon l'une quelconque des revendications 5 à 8, **caractérisé en ce que** le guide et le support des parties de fenêtre (16, 17, 116, 117) dans le dispositif de guidage s'effectue par des roues (23, 24, 25, 26) qui sont reliées aux parties de fenêtre (16, 17, 116, 117).

10. Dispositif de protection contre le vent selon l'une quelconque des revendications 1 à 9, **caractérisé en ce qu'**une fenêtre (6, 13, 117) présente deux ou trois parties de fenêtre (16, 17, 18, 19, 116, 117).

11. Dispositif de protection contre le vent selon l'une quelconque des revendications 1 à 10, **caractérisé en ce que** les parties de fenêtre (16, 17, 18, 19, 116, 117) peuvent être enlevées de leurs dispositifs de guidage respectifs.

12. Dispositif de protection contre le vent selon l'une quelconque des revendications 1 à 10, **caractérisé en ce que** les fenêtres (6, 106) avec leur dispositif de guidage peuvent être détachées du dispositif de protection contre le vent (1, 101).

13. Dispositif de protection contre le vent selon l'une quelconque des revendications 1 à 12, **caractérisé en ce que** les parties de fenêtre (16, 17, 18, 19, 116, 117) sont fabriquées à base de verre ou de matière synthétique transparente qui présente un revêtement conducteur.

14. Balance avec un dispositif de protection contre le vent selon l'une quelconque des revendications 1 à 13, **caractérisée en ce que** la balance présente un boîtier et **en ce que** le dispositif de protection contre le vent (1) présente un socle (12) qui peut être positionné sur le boîtier de balance.

15. Balance avec un dispositif de protection contre le vent selon l'une quelconque des revendications 1 à 13, **caractérisée en ce que** la balance présente un boîtier (48) et **en ce que** le dispositif de protection contre le vent (101) est disposé directement sur le boîtier de balance (48).

16. Balance selon la revendication 14 ou 15, **caractérisée en ce que** celle-ci présente un autre dispositif de guidage pour le au moins une fenêtre latérale (106) dans sa zone inférieure, lequel est conçu de telle sorte que, lorsque la fenêtre (106) latérale est ouverte, il ne présente pas de parties dépassant du dispositif de protection contre le vent (101) et/ou du boîtier de balance (48).

17. Balance selon la revendication 16, **caractérisée en ce que** l'autre dispositif de guidage est conçu pour la manipulation d'une fenêtre (106) latérale par le côté opposé et/ou pour une ouverture et une fermeture simultanées des deux fenêtres (106) latérales.
